# EUROPÄISCHE PATENTSCHRIFT

(11) **EP 0 474 143 B1**
(45) Veröffentlichungstag und Bekanntmachung des Hinweises auf die Patenterteilung: **28.12.1994**
(21) Anmeldenummer: 91114693.4
(22) Anmeldetag: 31.08.1991
(51) Int. Cl.: F16H 3/093

(54) **Getriebe**
Transmission
Transmission

(30) Priorität: 06.09.1990 US 578705
(43) Veröffentlichungstag der Anmeldung: 11.03.1992
(73) Patentinhaber: DEERE & COMPANY, Moline, Illinois 61265 (US)
(72) Erfinder: McAskill, John Pearce, Coffeyville, Kansas 67337 (US)
(74) Vertreter: Feldmann, Bernhard

(56) Entgegenhaltungen:
- FR-A- 2 591 300
- US-A- 3 675 508
- US-A- 4 543 840

## Beschreibung

Die Erfindung betrifft ein Getriebe, insbesondere ein Lastschaltgetriebe für Arbeitsfahrzeuge mit einer weiten Auswahl von Gängen, das für Arbeitsfahrzeuge, wie landwirtschaftliche und Nutzfahrzeuge geeignet ist.

Es ist eine Vielzahl von Lastschaltgetrieben, welche eine große Auswahl von Gängen aufweisen, bekannt. Eine derartige Auswahl von Gängen ist insbesondere bei großen Fahrzeugen, vor allem bei Arbeitsfahrzeugen, wie landwirtschaftliche oder Nutzfahrzeuge zweckmäßig. Derartige Fahrzeuge erfordern ein Dutzend oder mehr Gänge in einem sehr schmalen Bereich von beispielsweise 0,5 bis 5 km/h, jedoch lediglich wenige Gänge bei höheren Geschwindigkeiten, beispielsweise bis 40 km/h.

Diese Fahrzeuge weisen gewöhnlich eine hohe Masse auf oder stehen unter einer beträchtlichen Belastung, beispielsweise beim Pflügen, so daß die Änderung des Energieniveaus zwischen zwei aufeinanderfolgenden Gängen minimal sein sollte. Dies ist notwendig, um die erforderliche Schaltzeit klein zu halten, eine weichere Umschaltung zu erreichen und ein ausrollendes Anhalten des Fahrzeuges zu vermeiden. Gleichzeitig muß die Getriebebaugröße so klein wie möglich gehalten werden, um in vorhandene Fahrzeuge einbaubar zu sein.

Ein kürzlich von der Fa. Funk, USA, gefertigtes Lastschaltgetriebe für einen Breitspurschlepper hat 18 Vorwärts- und 9 Rückwärtsgänge. Hierfür waren 9 Kupplungen erforderlich, von denen 6 in einem Wechselgetriebeteil und 3 in einem Gruppengetriebeteil enthalten sind. Die 6 Kupplungen in dem Wechselgetriebeteil können 9 brauchbare Übersetzungsverhältnisse liefern, während die drei Kupplungen des Gruppengetriebeteils Zwei Vorwärts- und einen Rückwärtsbereich liefern.

Wenn es auch zunächst den Anschein hat, daß 9 zusätzliche Gänge durch Hinzufügen eines weiteren Vorwärtsbereichs bereitgestellt werden können, so stellt sich dies in der Praxis als nicht durchführbar heraus. Einerseits fehlt es an dem erfordelichen Raum. Von größerer Bedeutung ist es jedoch andererseits, daß sich bei der Konstruktion ein sehr unerwünschter Bereich für die Rückwärtsgeschwindigkeit ergibt. Dies liegt daran, daß die Übersetzungsverhältnisse des Wechselgetriebes völlig neu einzustellen sind, damit die Mehrzahl der Gänge in dem auch hier erwünschten, begrenzten Bereich zwischen beispielsweise 0,5 und 5 km/h liegt. Ferner wäre das Drehmoment, welches beim Schalten von einem Bereich in den anderen geändert werden müßte, unerwünscht hoch.

Die der Erfindung zugrunde liegende Aufgabe wird darin gesehen, ein komplett lastschaltbares Getriebe für ein Arbeitsfahrzeug der eingangs genannten Art anzugeben, das 24 Vorwärts- und 12 Rückwärtsgänge aufweist und bei dem die genannten Probleme vermieden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Konstruktion mit 10 Kupplungen verwendet. Davon gehören 6 Kupplungen zu einem Wechselgetriebeteil und 4 Kupplungen zu einem Gruppengetriebeteil.

Die Kupplungen und Zahnräder in dem Wechselgetriebeteil stellen 6 Vorwärtsgänge und 3 Rückwärtsgänge bereit, so daß die Rückwärtsfahrt nicht mehr wie bisher in dem Gruppengetriebeteil, sondern in dem Wechselgetriebeteil eingestellt wird. Die 4 Kupplungen in dem Gruppengetriebeteil liefern 4 Bereiche, so daß sich insgesamt 24 Vorwärts- und 12 Rückwärtsübersetzungen ergeben.

Mit der neuen Konstruktion wird ein Bereichswechsel nach jedem sechsten Umschalten und nicht nach jedem neunten Umschalten vorgenommen, wie es bei dem eingangs geschilderten, aus dem Stand der Technik abgeleiteten Getriebe der Fall wäre. Die 6 zusätzlichen Geschwindigkeiten sind geeignet, die Geschwindigkeitsänderungen zwischen Gangschritten zu vermindern, wodurch die erforderlichen Geschwindigkeitsänderungen der rotierenden Komponenten beim Schalten reduziert werden. Hierdurch wird die erforderliche Schaltzeit vermindert und ein weicheres Schalten erreicht.

Vorzugsweise liefert das Getriebe die Maschinenleistung direkt an eine wahlweise antreibbare Zapfwellenantriebswelle und umgewandelte Leistung an eine zweite Ausgangswelle, beispielsweise um die Vorwärtsräder eines vierradangetriebenen Fahrzeuges anzutreiben.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung einer Anordnung dreier Teilbereiche eines erfindungsgemäßen Getriebes, die in den
- Fig. 1a, 1b und 1c: jeweils im Querschnitt dargestellt sind und
- Fig. 2: eine schematische Darstellung des Getriebes gemäß Fig. 1.

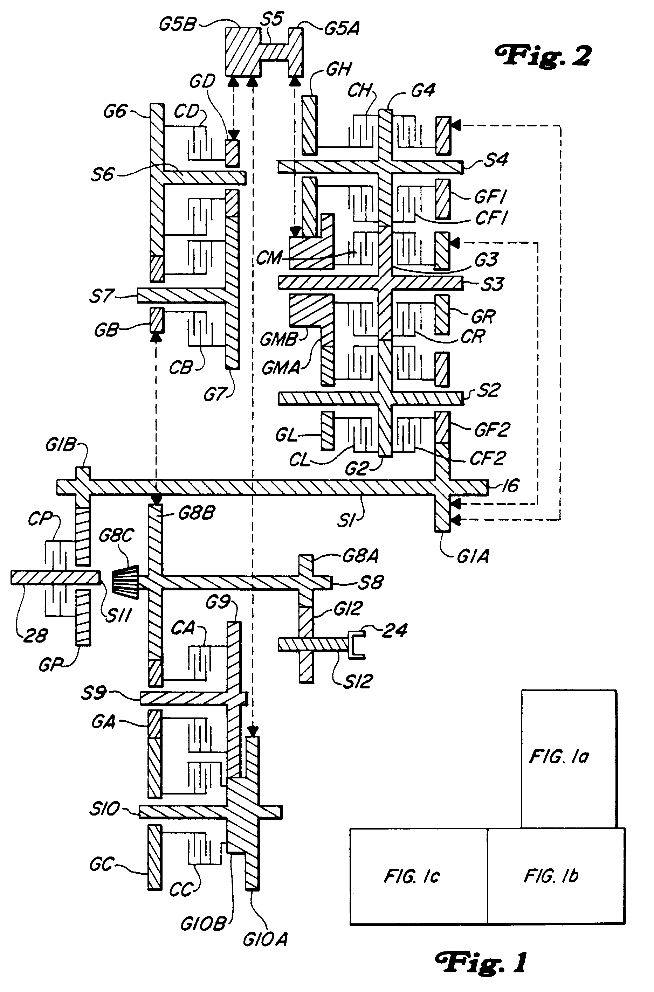

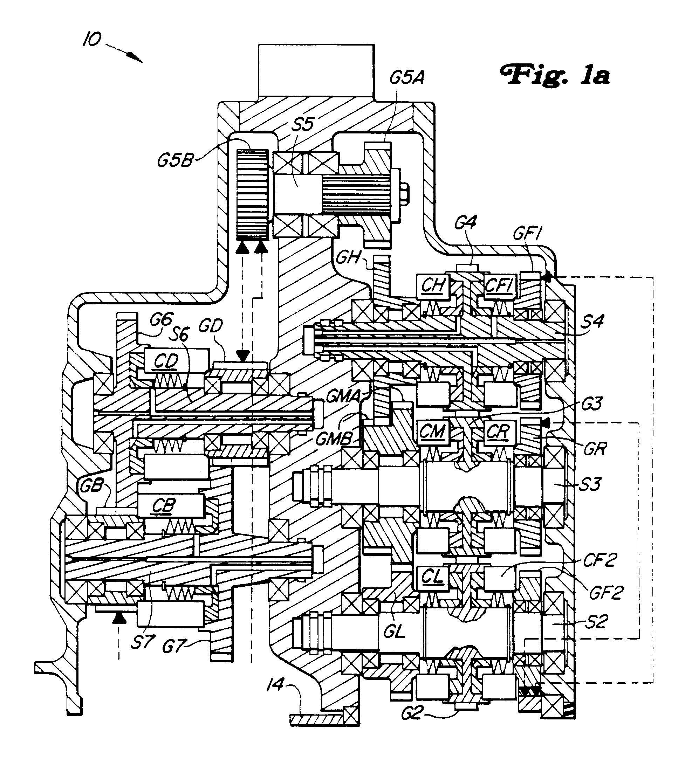

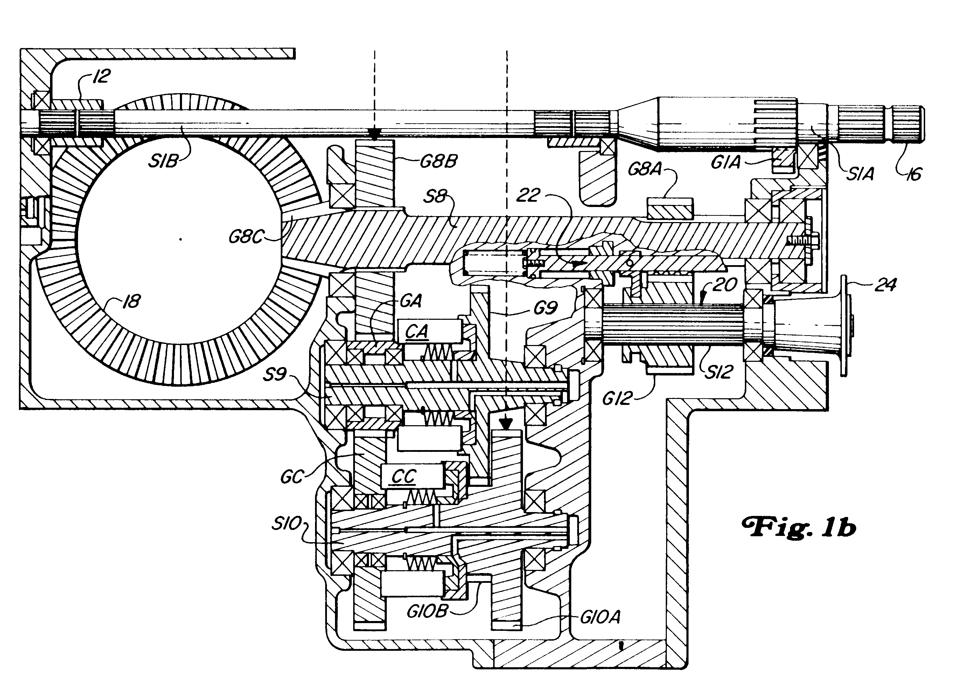

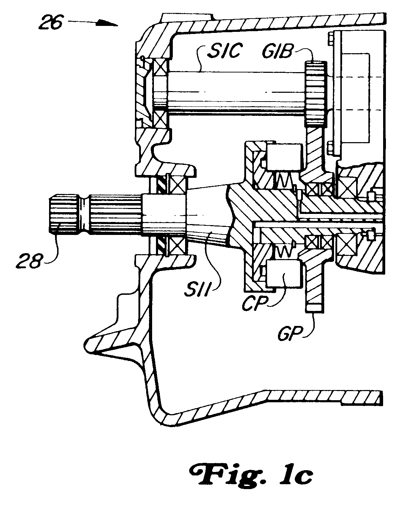

Die Figuren 1a, 1b und 1c stellen Teilbereiche des Getriebes dar und werden im folgenden gemeinsam mit Fig. 1 bezeichnet.

Der besseren Übersichtlichkeit halber wird im folgenden den Bezugszeichen aller Wellen der Buchstabe S, aller Kupplungen der Buchstabe C und aller Zahnräder der Buchstabe G vorangestellt. Ferner werden die Bezugszeichen einer Kupplung und des zugehörigen Zahnrades durch einen gemeinsamen Buchstaben ergänzt, beispielsweise Kupplung CR und Zahnrad GR. Ferner werden die übrigen Zahnräder durch Ziffern ergänzt, die der Welle entsprechen, auf der das Zahnrad drehfest montiert ist, so ist beispielsweise das Festrad G2 auf der Welle S2 montiert. Befinden sich mehrere Festräder auf einer Welle, so werden diese in alphabetischer Reihenfolge bezeichnet, beispielsweise Festrad G5A und G5B sind beide drehfest auf der Welle S5 montiert.

Gemäß Fig. 1 sind in einem Gehäuse 10 mehrere Wellen, Kupplungen und Zahnräder drehbar angeordnet. Wegen der einfacheren Herstellbarkeit besteht eine Eingangswelle S1 aus drei Teilen S1A, S1B und S1C. Diese drei Teile sind zueinander koaxial und drehbar in dem Gehäuse 10 angeordnet und drehfest durch Hülsen 12, 14 miteinander verbunden. Die drei Wellenteile werden nachfolgend gemeinsam als Eingangswelle S1 bezeichnet.

Die Eingangswelle S1 weist an einem ihrer Enden eine Eingangsverzahnung 16 auf, in die die Eingangsantriebskraft einer nicht dargestellten Antriebsmaschine, beispielsweise eines Fahrzeugmotors eingespeist wird. Die Eingangswelle S1 trägt das Festrad G1A.

Seitlich benachbart neben der Eingangswelle S1 ist die Welle S2 drehbar in dem Gehäuse 10 gelagert und trägt drehfest das Festrad G2. Die Welle S2 trägt ferner die Losräder GL und GF2. Durch die Kupplungen CL und CF2 lassen sich die Losräder GL bzw. GF2 wahlweise mit der Welle S2 drehfest verbinden. Das Losrad GF2 steht in ständigem Eingriff mit dem Festrad G1A.

Seitlich benachbart zu den Wellen S1 und S2 ist die Welle S3 im Gehäuse 10 drehbar gelagert und trägt das Festrad G3. Auf der Welle S3 sind die Losräder GMA, GMB und GR gelagert. Die Verzahnungen GMA und GMB sind vorzugsweise in dargestellter Weise als Doppelrad ausgebildet. Durch die Kupplung CM lassen sich die Losräder GMA und GMB und durch die Kupplung CR läßt sich das Losrad GR wahlweise mit der Welle S3 drehfest verbinden. Die Räder GR, G3 und GMA stehen ständig mit den Rädern G1A, G2 bzw. GL in Eingriff.

Seitlich benachbart zu den Wellen S1 und S3 ist die Welle S4 im Gehäuse 10 drehbar gelagert und trägt das Festrad G4. Auf der Welle S4 sind die Losräder GH und GF1 gelagert. Die Welle S4 trägt ferner die Kupplungen CH und CF1, durch die die Welle S4 wahlweise mit den Losrädern GH bzw. GF1 drehfest verbindbar ist. Die Räder GH, G4 und GF1 kämmen ständig mit den Rädern GMB, G3 bzw. G1A.

Seitlich benachbart zu der Welle S3 ist die Welle S5 im Gehäuse 10 drehbar gelagert und trägt die Festräder G5A und G5B. Das Festrad G5A kämmt ständig mit dem Losrad GMB.

Seitlich benachbart zu der Welle S5 ist die Welle S6 im Gehäuse 10 drehbar gelagert und trägt das Festrad G6. Auf der Welle S6 ist ein Losrad GD gelagert. Durch die Kupplung CD läßt sich die Welle S6 wahlweise mit dem Losrad GD drehfest verbinden. Das Losrad GD kämmt ständig mit dem Festrad G5B.

Seitlich benachbart zu der Welle S6 ist die Welle S7 im Gehäuse 10 drehbar gelagert und trägt das Festrad G7. Ein Losrad GB ist auf der Welle S7 gelagert. Durch die Kupplung CB läßt sich die Welle S7 wahlweise mit dem Losrad GB drehfest verbinden. Die Räder GB und G7 kämmen dauernd mit den Rädern G6 bzw. GD.

Seitlich benachbart zu der Welle S7 ist die Ausgangswelle S8 im Gehäuse 10 drehbar gelagert und trägt die Festräder G8A, G8B und G8C. Das Festrad G8C ist vorzugsweise ein Kegelrad, welches die Ausgangsleistung an das Ringrad 18 eines Differentials abgibt, um die Räder des Fahrzeuges, in dem das Getriebe verwendet wird, anzutreiben. Das Festrad G8B kämmt dauernd mit dem Losrad GB.

Seitlich benachbart zu der Ausgangswelle S8 ist die Welle S9 im Gehäuse 10 drehbar gelagert und trägt das Festrad G9. Ein Losrad GA ist auf der Welle S9 gelagert. Durch die Kupplung CA läßt sich das Losrad GA wahlweise mit der Welle S9 drehfest verbinden. Das Losrad GA kämmt ständig mit dem Festrad G8B.

Seitlich benachbart zu den Wellen S5 und S9 ist die Welle S10 im Gehäuse 10 drehbar gelagert und trägt die Festräder G10A und G10B, die als zwei Verzahnungen auf einem Zahnrad ausgebildet sein können. Ein Losrad GC ist auf der Welle S10 gelagert. Durch die Kupplung CC läßt sich das Losrad GC wahlweise mit der Welle S10 drehfest verbinden. Die Räder GC, G10B und G10A kämmen ständig mit den Rädern GA, G9 bzw. G5B.

Wie aus der Zeichnung zu entnehmen ist, sind die Wellen S2, S3 und S4 von im wesentlichen gleicher Größe und Konfiguration. Sie sind in einem ersten Wellensatz angeordnet, und ihre Enden liegen weitgehend in gemeinsamen Ebenen. Ebenso haben auch die Wellen S6, S7, S9 und S10 untereinander einen sehr ähnlichen Aufbau und sind in einem zweiten Wellensatz angeordnet, deren Enden wiederum weitgehend in gemeinsamen Ebenen liegen. Die beiden Wellensätze sind der Länge nach hintereinander angeordnet, wobei die Räder auf der Welle S5 dazu dienen, die Leistung von einem Rad des ersten Wellensatzes auf ein Rad des zweiten Wellensatzes zu übertragen.

Falls gewünscht, kann eine wahlweise einrückbare Zapfwelle vorgesehen sein. Hierfür ist ein zusätzliches Festrad G1B auf der Eingangswelle S1 angeordnet. In der Nähe des der Eingangsverzahnung 16 gegenüberliegenden Endes der Eingangswelle S1 ist in dem Gehäuse 10 eine Welle S11 drehbar gelagert. Sie trägt ein Losrad GP. Durch die Kupplung CP läßt sich das Losrad GP wahlweise mit der Welle S11 drehfest verbinden. Das Losrad GP steht in ständigem Eingriff mit dem Festrad G1B. Schließlich trägt die Welle S11 an einem ihrer Enden eine Zapfwellenverzahnung 28.

Auf ähnliche Weise kann auch eine zusätzliche Ausgangswelle, beispielsweise für den Vorderradantrieb eines vierradangetriebenen Fahrzeuges vorgesehen sein. Hierfür ist ein zusätzliches Festrad G8A auf der Ausgangswelle S8 befestigt. Seitlich benachbart zur Ausgangswelle S8 ist eine Welle S12 angeordnet, die bereichsweise eine Außenverzahnung 20 trägt. Die Außenverzahnung 20 steht mit einem Rad G12 in Verbindung, welches längs der Welle S12 verschiebbar ist. Das Zahnrad G12 ist zwischen einer ersten Lage, in der es mit dem Festrad G8A kämmt, und einer zweiten Lage, in der es vom Festrad G8A befreit ist, verschiebbar. Für die Verschiebung des Zahnrades G12 längs der Welle S12 ist ein Verschiebemechanismus 22 vorgesehen, der eine übliche Schaltgabel, Schaltstangen etc. enthält. Derartige Verschiebemechanismen sind bekannt und werden daher hier nicht näher erläutert. Schließlich trägt die Welle S12 an einem ihrer Enden ein Ausgangskuppelstück 24, um beispielsweise die Ausgangsleistung an die Vorderräder eines vierradgetriebenen Schleppers zu übertragen.

In der Zeichnung sind zahlreiche Lagerungen sowie Ölkanäle, die der Betätigung der verschiedenen Kupplungen dienen, dargestellt. Die Lagerungen und Steuereinrichtungen sind bekannt und wurden der besseren Übersichtlichkeit halber in vielen Wellen weggelassen. Es versteht sich, daß sie auf übliche Art ausgebildet sein können.

Fig. 2 ist eine schematische Darstellung eines Getriebes gemäß Fig. 1. Entsprechend der abgewickelten Querschnittsdarstellung in Fig. 1 sind nicht alle die Zahnräder im Eingriff dargestellt, die tatsächlich in Eingriff stehen. Durch gestrichelte Linien sollen diese Eingriffe angedeutet werden.

Gemäß einer bevorzugten Ausbildung der Erfindung entspricht die Zähnezahl der in der Zeichnung dargestellten Zahnräder nachfolgender Tabelle 1:

**Tabelle 1**

| Zahnrad | Zähnezahl | Zahnrad | Zähnezahl | Zahnrad | Zähnezahl |
|---|---|---|---|---|---|
| GA | 40 | GF2 | 48 | G5B | 35 |
| GB | 40 | GR | 54 | G6 | 81 |
| GC | 81 | GP | 71 | G7 | 81 |
| GD | 40 | G1A | 39 | G8A | 32 |
| GH | 67 | G1B | 22 | G8B | 80 |
| GMA | 67 | G2 | 60 | G9 | 81 |
| GMB | 53 | G3 | 60 | G10A | 81 |
| GL | 53 | G4 | 60 | G10B | 40 |
| GF1 | 54 | G5A | 41 | G12 | 38 |

Die Funktionsweise des Getriebes gemäß der vorliegenden Erfindung ist für den Fachmann ohne weiteres aus der vorstehenden Beschreibung und der Zeichnung zu entnehmen.

Prinzipiell wird eine Getriebegruppe A, B, C oder D durch Betätigung einer der Kupplungen CA, CB, CC oder CD ausgewählt. Die Fahrtrichtung und Geschwindigkeit wird dann durch Betätigung einer der Kupplungen CF1, CF2, CR und einer der Kupplungen CL, CM und CH des Wechselgetriebeteils gewählt. Durch verschiedene Kombinationen dieser Betätigungen können 24 Vorwärts- und 12 Rückwärtsgeschwindigkeiten eingestellt werden.

Insbesondere können die Kupplungen entsprechend Tabelle 2A und 2B eingerückt werden. Wenn die Zahnräder die in Tabelle 1 angegebene Zähnezahl aufweisen, entsprechen die sich ergebenden Getriebeübersetzungsverhältnisse den in den Tabellen 2A und 2B angegebenen Werten.

**Tabelle 2a**

| Vorwärtsgang | Kupplung betätigt | | | | | | | | | | Verhältnis |
|---|---|---|---|---|---|---|---|---|---|---|---|
| | C A | C B | C C | C D | C H | C M | C L | C F 1 | C F 2 | C R | |
| F1 | X | | | | | | X | X | | | 12.691 |
| F2 | X | | | | | | X | | X | | 11.281 |
| F3 | X | | | | | X | | X | | | 10.039 |
| F4 | X | | | | | X | | | X | | 8.924 |
| F5 | X | | | | X | | | X | | | 7.942 |
| F6 | X | | | | X | | | | X | | 7.059 |
| F7 | | X | | | | | X | X | | | 6.267 |
| F8 | | X | | | | | X | | X | | 5.571 |
| F9 | | X | | | | X | | X | | | 4.958 |
| F10 | | X | | | | X | | | X | | 4.407 |
| F11 | | X | | | X | | | X | | | 3.922 |
| F12 | | X | | | X | | | | X | | 3.486 |
| F13 | | | X | | | | X | X | | | 3.095 |
| F14 | | | X | | | | X | | X | | 2.751 |
| F15 | | | X | | | X | | X | | | 2.448 |
| F16 | | | X | | | X | | | X | | 2.176 |
| F17 | | | X | | X | | | X | | | 1.937 |
| F18 | | | X | | X | | | | X | | 1.722 |
| F19 | | | | X | | | X | X | | | 1.528 |
| F20 | | | | X | | | X | | X | | 1.359 |
| F21 | | | | X | | X | | X | | | 1.209 |
| F22 | | | | X | | X | | | X | | 1.075 |
| F23 | | | | X | X | | | X | | | 0.956 |
| F24 | | | | X | X | | | | X | | 0.850 |

**Tabelle 2b**

| Rückwärts-gang | Kupplung betätigt | | | | | | | | | | Verhältnis |
|---|---|---|---|---|---|---|---|---|---|---|---|
| | C A | C B | C C | C D | C H | C M | C L | C F 1 | C F 2 | c R | |
| R1 | X | | | | | | X | | | X | -12.691 |
| R2 | X | | | | | X | | | | X | -10.039 |
| R3 | X | | | | X | | | | | X | - 7.942 |
| R4 | | X | | | | | X | | | X | - 6.267 |
| R5 | | X | | | | X | | | | X | - 4.958 |
| R6 | | X | | | X | | | | | X | - 3.922 |
| R7 | | | X | | | | X | | | X | - 3.095 |
| R8 | | | X | | | X | | | | X | - 2.448 |
| R9 | | | X | | X | | | | | X | - 1.937 |
| R10 | | | | X | | | X | | | X | - 1.528 |
| R11 | | | | X | | X | | | | X | - 1.209 |
| R12 | | | | X | X | | | | | X | - 0.956 |

Auch wenn die Erfindung lediglich an Hand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

Beispielsweise kann der gesamte Bereich 26 des Gehäuses 10, welches die Wellen S1C, S11, die Kupplung CP und die Zahnräder G1B und GP enthält, entfallen, falls kein Zapfwellenausgang gewünscht wird. Ebenso können die Welle S12 und die zugehörigen Komponenten entfallen, wenn kein Vorderradantrieb gewünscht wird. Alternativ kann, sofern ein ständiger Vorderradantrieb gewünscht wird, das Zahnrad G12 so angeordnet werden, daß es in ständigem Eingriff mit dem Zahnrad G8A steht. In diesem Fall kann der Verschiebemechanismus entfallen.

## Patentansprüche

1. Getriebe, insbesondere Lastschaltgetriebe für Arbeitsfahrzeuge, mit wenigstens zehn in einem Getriebegehäuse (10) drehbar gelagerten Wellen (S1 bis S10) mit folgenden Merkmalen:
a) eine erste Welle (S1) enthält Mittel (16) zur Einspeisung der Eingangsantriebskraft und trägt ein erstes Festrad (S1A),
b) eine zweite Welle (S2) ist benachbart zur ersten Welle (S1) angeordnet und trägt ein erstes Losrad (GF2) und ein zweites Losrad (GL) sowie ein zweites Festrad (G2), wobei das erste Losrad (GF2) mit dem ersten Festrad (G1A) in ständigem Eingriff steht,
c) durch eine erste Kupplung (CF2) und eine zweite Kupplung (CL) lassen sich das erste Losrad (CF2) bzw. das zweite Losrad (GL) drehfest mit der zweiten Welle (S2) verbinden,
d) eine dritte Welle (S3) ist benachbart zur ersten und zweiten Welle (S1, S2) angeordnet und trägt ein drittes Losrad (GR), ein viertes Losrad (GMA) und ein fünftes Losrad (GMB) sowie ein drittes Festrad (G3), wobei das dritte Losrad (GR) mit dem ersten Festrad (G1A), das vierte Losrad (GMA) mit dem zweiten Losrad (GL) und das dritte Festrad (G3) mit dem zweiten Festrad (G2) in ständigem Eingriff stehen,
e) durch eine dritte Kupplung (CR) und eine vierte Kupplung (CM) lassen sich das dritte Losrad (GR) bzw. das vierte und fünfte Losrad (GMA, GMB) drehfest mit der dritten Welle (S3) verbinden,
f) eine vierte Welle (S4) ist benachbart zur ersten und dritten Welle (S1, S3) angeordnet und trägt ein sechstes Losrad (GF1) und ein siebtes Losrad (GH) sowie ein viertes Festrad (G4), wobei das sechste Losrad (GF1) mit dem ersten Festrad (G1A), das siebte Losrad (GH) mit dem fünften Losrad (GMB) und das vierte Festrad (G4) mit dem dritten Festrad (G3) in ständigem Eingriff stehen,
g) durch eine fünfte Kupplung (CF1) und eine sechste Kupplung (CH) lassen sich das sechste Losrad (GF1) bzw. das siebte Losrad (GH) drehfest mit der vierten Welle (S4) verbinden,
h) eine fünfte Welle (S5) ist benachbart zur dritten Welle (S3) angeordnet und trägt ein fünftes Festrad (G5A) und ein sechstes Festrad (G5B), wobei das fünfte Festrad (G5A) mit dem fünften Losrad (GMB) in ständigem Eingriff steht,
i) eine sechste Welle (S6) ist benachbart zur fünften Welle (S5) angeordnet und trägt ein achtes Losrad (GD) und ein siebtes Festrad (G6), wobei das achte Losrad (GD) mit dem sechsten Festrad (G5B) in ständigem Eingriff steht,
j) durch eine siebte Kupplung (CD) läßt sich das achte Losrad (GD) drehfest mit der sechsten Welle (S6) verbinden,
k) eine siebte Welle (S7) ist benachbart zur sechsten Welle (S6) angeordnet und trägt ein neuntes Losrad (GB) und ein achtes Festrad (G7), wobei das neunte Losrad (GB) mit dem siebten Festrad (G6) und das achte Festrad (G7) mit dem achten Losrad (GD) in ständigem Eingriff stehen,
l) durch eine achte Kupplung (CB) läßt sich das neunte Losrad (GB) drehfest mit der siebten Welle (S7) verbinden,
m) eine achte Welle (S8) ist benachbart zur siebten Welle (S7) angeordnet und trägt ein neuntes Festrad (G8B) und ein zehntes Festrad (G8C), wobei das neunte Festrad (G8B) mit dem neunten Losrad (GB) in ständigem Eingriff steht und das zehnte Festrad (G8C) als Ausgangsrad des Getriebes dient,
n) eine neunte Welle (S9) ist benachbart zur achten Welle (S8) angeordnet und trägt ein elftes Festrad (G9) und ein zehntes Losrad (GA), wobei das zehnte Losrad (GA) mit dem neunten Festrad (G8B) in ständigem Eingriff steht,
o) durch eine neunte Kupplung (CA) läßt sich das zehnte Losrad (GA) drehfest mit der neunten Welle (S9) verbinden,
p) eine zehnte Welle (S10) ist benachbart zur fünften und neunten Welle (S5, S9) angeordnet und trägt ein zwölftes Festrad (G10A), ein dreizehntes Festrad (G10B) und ein elftes Losrad (GC), wobei das zwölfte Festrad (G10A) mit dem sechsten Festrad (G5B), das dreizehnte Festrad (G10B) mit dem elften Festrad (G9) und das elfte Losrad (GC) mit dem zehnten Losrad (GA) in ständigem Eingriff stehen, und
q) durch eine zehnte Kupplung (CC) läßt sich das elfte Losrad (GC) drehfest mit der zehnten Welle (S10) verbinden.

2. Getriebe nach Anspruch 1 mit folgenden weiteren Merkmalen:
r) auf der ersten Welle (S1) ist ein vierzehntes Festrad (G1B) angeordnet,
s) eine elfte Welle (S11) ist benachbart zur ersten Welle (S1) angeordnet und trägt ein zwölftes Losrad (GP) und einen Zapfwellenanschluß (28), wobei das zwölfte Losrad (GP) mit dem vierzehnten Festrad (G1B) in ständigem Eingriff steht, und
t) durch eine elfte Kupplung (CP) läßt sich das zwölfte Losrad (GP) drehfest mit der elften Welle (S11) verbinden.

3. Getriebe nach Anspruch 1 oder 2 mit folgenden zusätzlichen Merkmalen:
u) auf der achten Welle (S8) ist ein fünfzehntes Festrad (G8A) angeordnet, und
v) eine zwölfte Welle (S12) ist benachbart zur achten Welle (S8) angeordnet und trägt ein Rad (G12) und ein Ausgangskuppelstück (24), wobei das Rad (G12) zwischen Zwei Lagen gleitbar auf der zwölften Welle (S12) angeordnet ist und in einer ersten Lage mit dem fünfzehnten Festrad (G8A) in ständigem Eingriff steht und in einer zweiten Lage vom fünfzehnten Festrad (G8A) befreit ist.

4. Getriebe nach Anspruch 3, dadurch gekennzeichnet, daß ein Verschiebemechanismus (22) vorgesehen ist, durch den das Rad (G12) zwischen seiner ersten und zweiten Lage verschiebbar ist.

5. Getriebe nach einem der Ansprüche 1 bis 4, dadurch gekennzeichnet, daß das vierte Losrad (GMA) und das fünfte Losrad (GMB) als ein Doppelzahnrad ausgebildet sind.

6. Getriebe nach einem der Ansprüche 1 bis 5, dadurch gekennzeichnet, daß das zwölfte Festrad (G10A) und das dreizehnte Festrad (G10B) als ein Doppelzahnrad ausgebildet sind.

7. Getriebe nach einem der Ansprüche 1 bis 6, dadurch gekennzeichnet, daß die zweite, dritte und vierte Welle (S2, S3, S4) seitlich benachbart zueinander in einem ersten Wellensatz angeordnet sind, daß die sechste, siebte, neunte und zehnte Welle (S6, S7, S9, S10) seitlich benachbart zueinander in einem zweiten Wellensatz angeordnet sind und daß der erste Wellensatz und der zweite Wellensatz der Länge nach aneinander angrenzend angeordnet sind.

8. Getriebe nach Anspruch 7, dadurch gekennzeichnet, daß die fünfte Welle (S5) sich zwischen den beiden Wellensätzen erstreckt.

## Claims

1. A transmission, especially a transmission shiftable under load, for working vehicles, with at least ten rotatably mounted shafts (S1 to S10) in a transmission housing (10), with the following features:
a) a first shaft (S1) has means (16) for feeding in the input drive power and carries a first fixed wheel (G1A),
b) a second shaft (S2) is arranged adjacent the first shaft (S1) and carries a first loose wheel (GF2) and a second loose wheel (GL) as well as a second fixed wheel (G2), the first loose wheel (GF2) being in constant mesh with the first fixed wheel (G1A),
c) the first loose wheel (GF2) and the second loose wheel (GL) can he fixed to the second shaft (S2) by a first clutch (CF2) and a second clutch (CL) respectively,
d) a third shaft (S3) is arranged adjacent the first and second shafts (S1, S2) and carries a third loose wheel (GR), a fourth loose wheel (GMA) and a fifth loose wheel (GMB) as well as a third fixed wheel (G3), the third loose wheel (GR), the fourth loose wheel (GMA) and the third fixed wheel (G3) being in constant mesh with the first fixed wheel (G1A), the second loose wheel (GL) and the second fixed wheel (G2) respectively,
e) the third loose wheel (GR) and the fourth and fifth loose wheels (GNA, GMB) can be connected rotationally fast with the third shaft (S3) by a third clutch (CR) and fourth clutch (CM) respectively,
f) a fourth shaft (S4) is arranged adjacent the first and third shafts (S1, S3) and carries a sixth loose wheel (GF1) and a seventh loose wheel (GH) as well as a fourth fixed wheel (G4), the sixth loose wheel (GF1), the seventh loose wheel (GH) and the fourth fixed wheel (G4) being in constant mesh with the first loose wheel (G1A), the fifth loose wheel (GMB) and the third fixed wheel (G3) respectively,
g) the sixth loose wheel (GF1) and the seventh loose wheel (GH) can be connected rotationally fast with the fourth shaft (S4) by a fifth clutch (CF1) and a sixth clutch (CH) respectively,
h) a fifth shaft (S5) is arranged adjacent the third shaft (S3) and carries a fifth fixed wheel (G5A) and a sixth fixed wheel (G5B), the fifth fixed wheel (G5A) being in constant mesh with the fifth loose wheel (GMB),
i) a sixth shaft (S6) is arranged adjacent the fifth shaft (S5) and carries an eighth loose wheel (GD) and a seventh fixed wheel (G6), the eighth loose wheel (GD) being in constant mesh with the sixth fixed wheel (G5B),
j) the eight loose wheel (GD) can be connected rotationally fast with the sixth shaft (S6) by a seventh clutch (CD),
k) a seventh shaft (S7) is arranged adjacent the sixth shaft (S6) and carries a ninth loose wheel (GB) and an eighth fixed wheel (G7), the ninth loose wheel (GB) and the eighth fixed wheel (G7) being in constant mesh with the seventh fixed wheel (G6) and the eight loose wheel (GD) respectively,
l) the ninth loose wheel (GB) can be connected rotationally fast with the seventh shaft (S7) by an eighth clutch (CB),
m) an eighth shaft (S8) is arranged adjacent the seventh shaft (S7) and carries a ninth fixed wheel (G8B) and a tenth fixed wheel (G8C), the ninth fixed wheel (G8B) being in constant mesh with the ninth loose wheel (GB) and the tenth fixed wheel (G8C) serving as the output wheel of the transmission,
n) a ninth shaft (S9) is arranged adjacent the eighth shaft (S8) and carries an eleventh fixed wheel (G9) and a tenth loose wheel (GA), the tenth loose wheel (GA) being in constant mesh with the ninth fixed wheel (G8B),
o) the tenth loose wheel (GA) can be connected rotationally fast with the ninth shaft (S9) by a ninth clutch (CA),
p) a tenth shaft (S10) is arranged adjacent the fifth and ninth shafts (S5, S9) and carries a twelfth fixed wheel (G10A), a thirteenth fixed wheel (G10B) and an eleventh loose wheel (GC), the twelfth fixed wheel (G10A), the thirteenth fixed wheel (G10B) ad the eleventh loose wheel (GC) being in constant mesh with the sixth fixed wheel (G5B), the eleventh fixed wheel (G9) and the tenth loose wheel (GA) respectively, and
q) the eleventh loose wheel (GC) can be connected rotationally fast with the tenth shaft (S10) by a tenth clutch (CC).

2. A transmission according to claim 1, with the following additional features:
r) a fourteenth fixed wheel (G1B) is arranged on the first shaft (S1),
s) an eleventh shaft (S11) is arranged adjacent to the first shaft (S1) and carries a twelfth loose wheel (GP) and a PTO shaft connection (28), the twelfth loose wheel (GP) being in constant mesh with the fourteenth fixed wheel (G1B), and
t) the twelfth loose wheel (GP) can be connected rotationally fast with the eleventh shaft (S11) by an eleventh clutch (CP).

3. A transmission according to claim 1 or 2, with the following additional features:
u) a fifteenth fixed wheel (G8A) is arranged on the eighth shaft (S8), and
v) a twelfth shaft (S12) is arranged adjacent the eighth shaft (S8) and carries a wheel (G12) and an output clutch part (24), wherein the wheel (G12) is arranged slidably on the twelfth shaft (S12) between two bearings and is in constant mesh with the fifteenth fixed wheel (G8A) in a first position and is freed from the fifteenth fixed wheel (G8A) in a second position.

4. A transmission according to claim 3, characterized in that a shift mechanism (22) is provided for sliding the wheel (G12) between its first and second positions.

5. A transmission according to any of claims 1 to 4, characterized in that the fourth loose wheel (GMA) and the fifth loose wheel (GMB) are formed as a double gearwheel.

6. A transmission according to any of claims 1 to 5, characterized in that the twelfth fixed wheel (G10A) and the thirteenth fixed wheel (G10B) are formed as a double gearwheel.

7. A transmission according to any of claims 1 to 6, characterized in that the second, third and fourth shafts (S2, S3, S4) are arranged beside each other in a first set of shafts, in that the sixth, seventh, ninth and tenth shafts (S6, S7, S9, S10) are arranged beside each other in a second set of shafts and in that the first shaft set and the second shaft set are arranged lengthwise adjacent each other.

8. A transmission according to claim 7, characterized in that the fifth shaft (S5) extends between the two shaft sets.

## Revendications

1. Transmission, notamment boîte de vitesses commandée en charge pour des véhicules de travail, comportant au moins dix arbres (S1 à S10) montés de manière à tourner dans un carter (10) de la transmission, présentant les caractéristiques suivantes :
a) un premier arbre (S1) comporte des moyens (16) pour appliquer la force d'entraînement d'entrée et porte un premier pignon fixe (S1A),
b) un second arbre (S2) est disposé au voisinage du premier arbre (S1) et porte un premier pignon fou (GF2) et un second pignon fou (GL) ainsi qu'un premier pignon fixe (G2), le premier pignon fou (GF2) engrenant en permanence avec le premier pignon fixe (G1),
c) grâce à un premier accouplement (CF2) et un second accouplement (CL1), le premier pignon fou (CF2) ou le second pignon fou (GL1) peut être relié avec blocage en rotation au second arbre (S2),
d) un troisième arbre (11) est disposé au voisinage des premier et second arbres (S1,S2) et porte un troisième pignon fou (G1), un quatrième pignon fou (GMA) et un cinquième pignon fou (GMB) ainsi qu'un troisième pignon fixe (G3), le troisième pignon fou (GR) engrenant en permanence avec le premier pignon fixe (G1A), le quatrième pignon fou (GMA) engrenant en permanence avec le second pignon fou (GL), et le troisième pignon fixe (G3) engrenant en permanence avec le second pignon fixe (G2),
e) grâce à un troisième accouplement (CR) et un quatrième accouplement (CM), le troisième pignon fou (GR) ou les quatrième et cinquième pignons fous (GMA, GMB) peuvent être reliés avec blocage en rotation au troisième arbre (S3),
f) un quatrième arbre (S4) est disposé au voisinage des premier et troisième arbres (S1,S3) et porte un sixième pignon fou (GF1) et un septième pignon fou (GH) ainsi qu'un premier pignon fixe (G4), le sixième pignon fou (GF1) engrenant en permanence avec le premier pignon fixe (G1A), le septième pignon fou (GH) engrenant en permanence avec le cinquième pignon fou (GMB) et le quatrième pignon fixe (G4) engrenant en permanence avec le troisième pignon fixe (G3),
g) au moyen d'un cinquième accouplement (CF1) et d'un sixième accouplement (CH), le sixième pignon fou (GF1) ou le septième pignon fou (GH) peut être relié avec blocage en rotation au quatrième arbre (S4),
h) un cinquième arbre (S5) est disposé au voisinage du troisième arbre (S3) et porte un cinquième pignon fixe (G5A) et un sixième pignon fixe (G5B), le cinquième pignon fixe (G5A) engrenant en permanence avec le cinquième pignon fou (GMB),
i) un sixième arbre (S6) est disposé au voisinage du cinquième arbre (S5) et porte un huitième pignon fou (GD) et un septième pignon fixe (G6), le huitième pignon fou (GD) engrenant en permanence avec le sixième pignon fixe (G5B),
j) au moyen d'un septième accouplement (CD), le huitième pignon fou (GD) peut être relié avec blocage en rotation au sixième arbre (S6),
k) un septième arbre (S7) est disposé au voisinage du sixième arbre (S6) et porte un neuvième pignon fou (GB) et un huitième pignon fixe (G7), un neuvième pignon fou (GB) engrenant en permanence avec le septième pignon fixe (G6), et le huitième pignon fixe (G7) engrenant en permanence avec le huitième pignon fou (GD),
l) grâce à un huitième accouplement (CB), le neuvième pignon fou (GB) peut être relié avec blocage en rotation au septième arbre (S7),
m) un huitième arbre (S8) est disposé au voisinage du septième arbre (S7) et porte un neuvième pignon fixe (G8B) et un dixième pignon fixe (G8C), le neuvième pignon fixe (G8B) engrenant en permanence avec le neuvième pignon fou (GB), tandis que le dixième pignon fixe (G8C) est utilisé en tant que pignon de sortie de la transmission,
n) un neuvième arbre (S9) est disposé au voisinage du huitième arbre (S8) et porte un onzième pignon fixe (G9) et un dixième pignon fou (GA), le dixième pignon fou (GA) engrenant en permanence avec le neuvième pignon fixe (G8B),
o) grâce à un neuvième accouplement (CA), le dixième pignon fou (GA) peut être relié avec blocage en rotation au neuvième arbre (S9),
p) un dixième arbre (S10) est disposé au voisinage des cinquième et neuvième arbres (S5, S9) et porte un douzième pignon fixe (G10A), un treizième pignon fixe (G10B) et un onzième pignon fou (GC), le douzième pignon fixe (G10A) engrenant en permanence avec le sixième pignon fixe (G5B), le treizième pignon fixe (G10B) engrenant en permanence avec le onzième pignon fixe (G9) et le onzième pignon fou (GC) engrenant en permanence avec le dixième pignon fou (GA), et
q) grâce à un dixième accouplement (CC), le onzième pignon fou (GC) peut être relié avec blocage en rotation au dixième arbre (S10).

2. Transmission selon la revendication 1, présentant les autres caractéristiques suivantes :
r) un quatorzième pignon fixe (G1B) est monté sur le premier arbre (S1),
s) un onzième arbre (S11) est disposé au voisinage du premier arbre (S1) et porte un douzième pignon fou (GP) et une prise d'arbre (28), le douzième pignon fou (GP) engrenant en permanence avec le quatorzième pignon fixe (G1B), et
t) grâce à un onzième accouplement (CP), le douzième pignon fou (GP) peut être relié avec blocage en rotation au onzième arbre (S11).

3. Transmission suivant la revendication 1 ou 2, présentant les caractéristiques suivantes :
u) un quinzième pignon fixe (G8A) est monté sur le huitième arbre (S8), et
v) un douzième arbre (S12) est disposé au voisinage du huitième arbre (S8) et porte un pignon (G12) et un élément d'accouplement de sortie (24), le pignon (G12) étant disposé de manière à pouvoir glisser entre deux positions sur le douzième arbre (S12) et, dans une première position, engrenant avec le quinzième pignon fixe (G8) et, dans une seconde position, étant dégagé du quinzième pignon fixe (G8A).

4. Transmission selon la revendication 3, caractérisée en ce qu'il est prévu un mécanisme de déplacement (22), au moyen duquel le pignon (G12) peut être déplacé entre ses première et seconde positions.

5. Transmission selon l'une des revendications 1 à 4, caractérisée en ce que le quatrième pignon fou (GMA) et le cinquième pignon fou (GMB) sont réalisés sous la forme d'un pignon double.

6. Transmission selon l'une des revendications 1 à 5, caractérisée en ce que le douzième pignon fixe (G10A) et le treizième pignon fixe (G10B) sont réalisés sous la forme d'un pignon double.

7. Transmission selon l'une des revendications 1 à 6, caractérisée en ce que les second, troisième et quatrième arbres (S2,S3,S4) sont disposés latéralement au voisinage les uns des autres dans un premier ensemble d'arbres de telle sorte que les sixième, septième, neuvième et dixième arbres (S6,S7,S9,S10) sont disposés latéralement au voisinage les uns des autres dans un second ensemble d'arbres et que le premier ensemble d'arbres et le second ensemble d'arbres sont disposés de manière à être contigus dans le sens de la longueur.

8. Transmission selon la revendication 7, caractérisée en ce que le cinquième arbre (S5) s'tend entre les deux ensembles d'arbres.
